# EUROPEAN PATENT APPLICATION

(11) **EP 4 786 280 A1**
(43) Date of publication of application: **05.08.2026**
(21) Application number: 23953544.6
(22) Date of filing: 27.09.2023
(51) Int. Cl.: B60R 13/02, B29C 33/42

(54) **PLASTIC COVER AND VEHICLE**

(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: YANG, Xiaomeng, Hangzhou, Zhejiang 310051 (CN); BAI, Fujun, Hangzhou, Zhejiang 310051 (CN); WANG, Xunjiu, Hangzhou, Zhejiang 310051 (CN); GU, Linna, Hangzhou, Zhejiang 310051 (CN)
(74) Representative: Boult Wade Tennant LLP
(86) International application number: PCT/CN2023/122226
(87) International publication number: WO 2025/065391

(57) **Abstract**

A plastic cover and a vehicle are provided, where the plastic cover includes a main body portion (100), a surface of the main body portion (100) is provided with a plurality of first protrusions (200), the plurality of first protrusions (200) are spaced apart and evenly distributed on the surface of the main body portion (100), each first protrusion (200) is further provided with a plurality of first protruding points (210), the plurality of first protruding points (210) are spaced apart and evenly distributed on the outer surface of the first protrusion (200), and the first protrusions (200), the first protruding points (210) and the main body portion (100) are an integrated molding structure. By providing the protrusions and the protruding points, the scratch resistance of the plastic cover can be improved, the continuity of scratches can be blocked, and the impact of the scratches on the aesthetics of the plastic cover can be reduced.

## Description

### TECHNICAL FIELD

The present application relates to the field of automobile decoration technology and, in particular, to a plastic cover and a vehicle.

### BACKGROUND

Plastic covers are commonly used decorative components for both interior and exterior of vehicles. The plastic covers may be applied to door trim panels, interior handles, front cockpit control consoles, steering wheels, and other areas, which can reduce the manufacturing costs, while reducing the weight of a vehicle body.

However, the plastic covers in the above related art is easily scratched, and continuous and obvious scratches may be formed on a surface, which affects the aesthetics of the plastic covers and the user's experience.

### SUMMARY

Embodiments of the present application provide a plastic cover and a vehicle, which are used to solve the technical problem in the above related art that a plastic cover is easily scratched and continuous and obvious scratches are formed on a surface of plastic cover, affecting the aesthetics of the plastic cover and the user's experience.

In order to achieve the above objectives, the embodiments of the present application provide the following technical solutions.

A first aspect of the embodiments of the present application provides a plastic cover, which includes a main body portion, where a surface of the main body portion is provided with a plurality of first protrusions, and the plurality of first protrusions are spaced apart and evenly distributed on the surface of the main body portion;
each first protrusion is further provided with a plurality of first protruding points, and the plurality of first protruding points are spaced apart and evenly distributed on an outer surface of the each first protrusion; and
the first protrusions, the first protruding points and the main body portion are in an integrated molding structure.

On the basis of the above technical solution, the present application may also be improved as follows.

In a possible implementation, the outer surface of the first protrusion is disposed facing away from the surface of the main body portion, and the outer surface of the first protrusion is an arc-shaped surface.

In a possible implementation, the first protruding point is provided on the arc-shaped surface and extends away from the arc-shaped surface, and an extension direction of the first protruding point is perpendicular to a surface at which the first protruding point is connected with the arc-shaped surface.

In a possible implementation, an area of an orthographic projection of the each first protrusion onto the surface of the main body portion is greater than or equal to 1 mm² and less than or equal to 6 mm²;
and/or, an area of an orthographic projection of the first protruding point onto the outer surface of the first protrusion is less than or equal to 2 mm².

In a possible implementation, a maximum distance from the outer surface of the first protrusion to the surface of the main body portion is less than or equal to 250 µm;
and/or, a maximum distance from the first protruding point to the outer surface of the first protrusion is less than or equal to 100 µm.

In a possible implementation, a distance between any two adjacent first protrusions is greater than or equal to 0.2 mm and less than or equal to 6 mm.

In a possible implementation, the outer surface of the first protrusion is further provided with at least one second protrusion, and the plurality of the second protrusions are spaced apart and evenly distributed on the outer surface of the first protrusion;
the second protrusion is provided with at least one second protruding point;
and/or, there are a plurality of second protruding points, and the plurality of second protruding points are spaced apart and evenly distributed on the second protrusion.

In a possible implementation, the second protrusion extends away from the outer surface of the first protrusion, and an extension direction of the second protrusion is perpendicular to a surface at which the second protrusion is connected with the first protrusion.

In a possible implementation, a maximum distance from an outer surface of the second protrusion to the outer surface of the first protrusion is less than or equal to 200 µm;
and/or, a size of the second protruding point is the same as that of the first protruding point.

In a possible implementation, an area of an orthographic projection of the second protruding point onto the outer surface of the second protrusion is less than or equal to 1 mm².

In a possible implementation, an area of an orthographic projection of the second protrusion onto the outer surface of the first protrusion is greater than or equal to 1 mm² and less than or equal to 4 mm².

A second aspect of the embodiments of the present application provides a vehicle, which includes a vehicle body and the plastic cover described above.

The embodiments of the present application provide a plastic cover and a vehicle, where the plastic cover includes a main body portion, a surface of the main body portion is provided with a plurality of first protrusions, the plurality of first protrusions are spaced apart and evenly distributed on the surface of the main body portion, each first protrusion is further provided with a plurality of first protruding points, the plurality of first protruding points are spaced apart and evenly distributed on an outer surface of the first protrusion, and the first protrusions, the first protruding points and the main body portion are in an integrated injection molding structure. By providing a plurality of first protrusions that are spaced apart and evenly distributed, the probability of direct contact between the surface of the main body portion and a hard object can be reduced, and the probability of the main body portion being scratched can be reduced, and continuous scratches can be avoided on the main body portion. By further providing a plurality of first protruding points on the first protrusions, the protruding points are enabled to contact the hard object first, which reduces the probability of the first protrusions contacting the hard object, thereby further reducing the probability of the surface of the main body portion being scratched, the probability of the main body portion of the plastic cover being scratched, and then the influence of the scratches on the aesthetics of the plastic cover, and improving the user experience.

### BRIEF DESCRIPTION OF DRAWINGS

In order to more clearly explain technical solutions in embodiments of the present application or the prior art, the drawings to be required in the description of the embodiments or the prior art will be briefly introduced below. Obviously, the drawings in the following description are some embodiments of the present application, and other drawings may also be obtained based on these drawings without creative labor for those of ordinarily skilled in the art.
FIG. 1 is a schematic structural diagram of a plastic cover provided in an embodiment of the present application.
FIG. 2 is a schematic structural diagram of one first protrusion of the plastic cover in FIG. 1.
FIG. 3 is a schematic structural diagram of a hard object on the plastic cover in FIG. 1 in a direction indicated by an arrow X and forming a scratch.
FIG. 4 is a schematic cross-sectional view of a hard object when contacting a first protrusion on a plastic cover.
FIG. 5 is a schematic structural diagram of a first protrusion provided with first protruding points.
FIG. 6 is a schematic structural diagram of another plastic cover provided in an embodiment of the present application.
FIG. 7 is a schematic cross-sectional view of a hard object when contacting a second protrusion on a plastic cover.
FIG. 8 is a schematic structural diagram of a first protrusion provided with second protrusions.

Description of reference numerals:

| | | | |
|---|---|---|---|
| 100- | main body portion; | 110- | texture structure; |
| 200- | first protrusion; | 210- | first protruding point; |
| 300- | second protrusion; | 310- | second protruding point; |
| 400- | hard object. | | |

### DESCRIPTION OF EMBODIMENTS

As described in the background, the plastic cover in the prior art is easily scratched and continuous and obvious scratches are formed on the surface, which affects the aesthetics of the plastic cover and the user's experience. The reason for this problem is that no scratch-proof structure is provided on the surface of the plastic cover, and the surface of the plastic cover is flat with no other structure provided. When a hard object collides with an outer surface of the plastic cover, it is easy to form scratches on the outer surface of the plastic cover. Moreover, since the surface is relatively flat, the scratches are in a continuous form. The continuous and long scratches on the plastic cover are easily recognized by the user, thereby affecting the aesthetics of the plastic cover and the user's experience.

In view of the above technical problems, embodiments of the present application provide a plastic cover and a vehicle, where the plastic cover includes a main body portion, a surface of the main body portion is provided with a plurality of first protrusions, the plurality of first protrusions are spaced apart and evenly distributed on the surface of the main body portion, each first protrusion is provided with a plurality of first protruding points, the plurality of first protruding points are spaced apart and evenly distributed on an outer surface of the each first protrusion, and the first protrusions, the first protruding points and the main body portion are in an integrated injection molding structure. By providing a plurality of first protrusions that are spaced apart and evenly distributed, the probability of direct contact between the surface of the main body portion and a hard object can be reduced, and the probability of the main body portion being scratched can be reduced, and continuous scratches can be avoided on the main body portion. By further providing a plurality of first protruding points on the first protrusions, the protruding points are enabled to contact the hard object first, which reduces the probability of the first protrusions contacting the hard object, thereby further reducing the probability of the surface of the main body portion being scratched, the probability of the main body portion of the plastic cover being scratched, and the influence of the scratches on the aesthetics of the plastic cover, and improving the user experience.

In order to make the purposes, technical solutions and advantages of the present application clearer, the technical solutions in the present application will be described clearly and comprehensively in conjunction with the accompanying drawings in the present application. Obviously, the described embodiments are only some of the embodiments of the present application, but not all of them. Based on the embodiments in the present application, all other embodiments obtained by those of ordinarily skilled in the art without creative work shall fall within the protection scope of the present application.

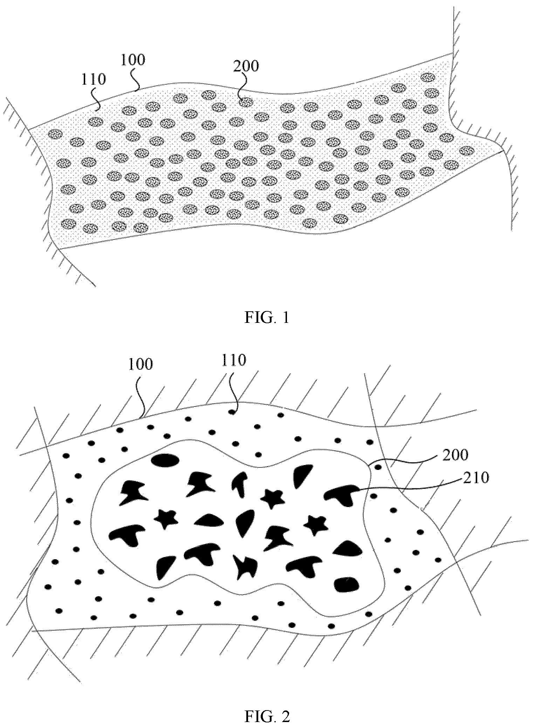

Referring to FIG. 1 and FIG. 2, an embodiment of the present application provides a plastic cover, where the plastic cover may include a main body portion 100, and a surface of the main body portion 100 facing outward is provided with a plurality of first protrusions 200, and the plurality of first protrusions 200 are spaced apart and evenly distributed on the surface of the main body portion 100. The first protrusions 200 and the main body portion 100 may be an integrated molding structure, for example, the first protrusions 200 and the main body portion 100 may be in an integrated injection molding structure. By providing the first protrusions 200 and the main body portion 100 as an integrated molding structure, the connection stability between the first protrusions 200 and the main body portion 100 can be improved, and the strength and impact resistance of the first protrusions 200 can be improved.

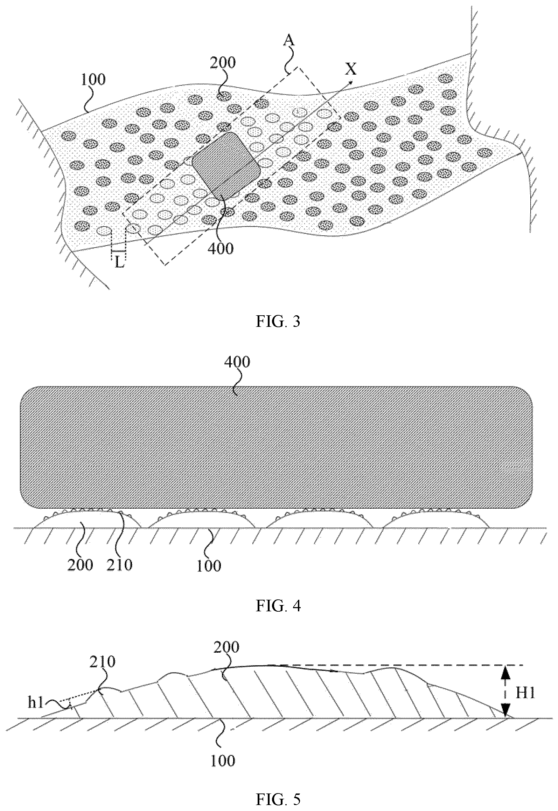

Referring to FIG. 3 and FIG. 4, if a hard object 400 moves in a first direction (as indicated by an arrow X in FIG. 3) on the plastic cover, a scratch in the X direction (as indicated by an area A in a dotted box in FIG. 3) will be formed on the plastic cover. By providing a plurality of first protrusions 200 that are evenly arranged on the surface of the main body portion 100 facing outward, a contact area between the main body portion 100 and the hard object 400 can be lowered, the probability of the surface of the main body portion 100 being scratched can be reduced, and it is possible to prevent continuous long scratches from being formed on the surface of the main body portion 100 of the plastic cover after the plastic cover is scratched. Compared with continuous long scratches, it can reduce the recognition of the scratches, lower the influence of the scratches on the aesthetics of the plastic cover, and improve the user experience.

In some embodiments, the surface of the main body portion 100 facing outward may be provided with a pattern structure 110 of different shapes. In an embodiment of the present application, the first protrusions 200 may be in any shape, and shapes of two adjacent first protrusions 200 may be the same or different. In a specific implementation, a shape of a projection of the first protrusion 200 toward the surface of the main body portion 100 may be an oval shape, a circular shape, a polygonal shape, and the like.

Referring to FIG. 2, FIG. 3 and FIG. 4, each of the first protrusions 200 is provided with a plurality of first protruding points 210, and the plurality of first protruding points 210 are spaced apart and evenly distributed on an outer surface of the first protrusion 200, so that the first protruding points 210 are in contact with the hard object 400, thereby reducing a contact area between the first protrusion 200 and the hard object 400, reducing a contact area between the plastic cover and the hard object 400, and further reducing the continuity of the scratches.

In some embodiments, the first protruding points 210, the first protrusions 200 and the main body portion 100 are in an integrated molding structure. For example, the first protruding points 210, the first protrusions 200 and the main body portion 100 may be in an integrated injection molding structure. In some embodiments, a plurality of first protruding points 210 may be provided on each of the first protrusions 200. For example, the number of first protruding points 210 on one first protrusion 200 may be one, two, three, four, six, eight or even more. By providing a plurality of first protruding points 210 on the outer surface of the first protrusion 200, the contact area between the first protruding point 210 and the hard object 400 is increased, and the bearing capacity of the first protruding point 210 on the first protrusion 200 to the hard object 400 is improved, preventing the first protruding point 210 from being separated from the first protrusion 200 due to excessive pressure on the first protruding point 210.

The embodiments of the present application provide a plastic cover and a vehicle, where the plastic cover includes a main body portion 100, a surface of the main body portion 100 is provided with a plurality of first protrusions 200, the plurality of first protrusions 200 are spaced apart and evenly distributed on the surface of the main body portion 100, each of the first protrusions 200 is provided with a plurality of first protruding points 210, the plurality of first protruding points 210 are spaced apart and evenly distributed on an outer surface of the first protrusion 200, and the first protrusions 200, the first protruding points 210 and the main body portion 100 are in an integrated injection molding structure. By providing a plurality of first protrusions 200 that are spaced apart and evenly distributed, the probability of direct contact between the surface of the main body portion 100 and a hard object 400 can be reduced, and the probability of the main body portion 100 being scratched can be reduced, and continuous scratches can be avoided on the main body portion 100. By further providing a plurality of first protruding points 210 on the first protrusions 200, the protruding points are enabled to contact the hard object 400 first, which reduces the probability of the first protrusions 200 contacting the hard object 400, thereby further reducing the probability of the surface of the main body portion 100 being scratched, the probability of the main body portion 100 of the plastic cover being scratched and the influence of the scratches on the aesthetics of the plastic cover, and improving the user experience.

Referring to FIG. 3, in some embodiments, an area of an orthographic projection of each of the first protrusions 200 onto the surface of the main body portion 100 is greater than or equal to 1 mm² and less than or equal to 6 mm². For example, the area of the orthographic projection of the first protrusion 200 onto the surface of the main body portion 100 may be 1 mm², 1.5 mm ², 2 mm², 2.4 mm², 3 mm², 3.7 mm², 4 mm², 5 mm², 5.6 mm², etc. The areas of the orthographic projections of different first protrusions 200 onto the surface of the main body portion 100 may be the same or completely different. If the area of the orthographic projection of the first protrusion 200 onto the surface of the main body portion 100 is too large, the contact area between the first protrusion 200 and the hard object 400 may be too large, which may easily produce continuous scratches, and may also cause the surface of the main body portion 100 to be too rough, affecting the aesthetic and the user's experience.

Referring to FIG. 3, a distance (as shown by L in FIG. 3) between every two adjacent first protrusions 200 is greater than or equal to 0.2 mm and less than or equal to 6 mm. In some embodiments, the distance L between every two adjacent first protrusions 200 may be 0.5 mm, 1 mm, 1.7 mm, 3 mm, 3.7 mm, 4.3 mm, 4.8 mm or 5.5 mm. If the distance L between two adjacent first protrusions 200 is less than 0.2 mm, the distance L between two adjacent first protrusions 200 may be too small, so that the first protrusions 200 are too densely distributed on the surface of the main body portion 100, and the effect of blocking the continuity of the scratches cannot be realized.

Referring to FIG. 4, in a possible implementation, the outer surface of the first protrusion 200 is disposed to face away from the surface of the main body portion 100, and the outer surface of the first protrusion 200 is an arc-shaped surface. By setting the outer surface of the first protrusion 200 as an arc-shaped surface, the contact area between the hard object 400 and the outer surface of the first protrusion 200 can be reduced, so that the area of the scratches caused by scratching of the hard object 400 can be reduced. In addition, by setting the outer surface of the first protrusion 200 as an arc-shaped surface, the force uniformity of the outer surface of the first protrusion 200 can be improved.

In some embodiments, the outer surface of the first protrusion 200 may be at least one of a circular arc-shaped surface, an elliptical arc-shaped surface or a polygonal arc-shaped surface. The outer surface of the first protrusion 200 is not specifically limited in the present application.

Referring to FIG. 4, in a possible implementation, the first protruding point 210 is disposed on the arc-shaped surface and extends away from the arc-shaped surface, and an extension direction of the first protruding point 210 is perpendicular to a surface at which the first protruding point 210 is connected with the arc-shaped surface. By making the extension direction of the first protruding point 210 perpendicular to the surface at which the first protruding point 210 is connected with the arc-shaped surface, the first protruding point 210 can be extended in various directions, so that the first protruding point 210 can bear forces in different directions.

Referring to FIG. 5, in a possible implementation, a maximum distance (as shown by H1 in FIG. 5) H1 from the outer surface of the first protrusion 200 to the surface of the main body portion 100 is less than or equal to 250 µm. For example, the maximum distance H1 from the outer surface of the first protrusion 200 to the surface of the main body portion 100 may be 100 µm, 150 µm, 200 µm or 230 µm. If the maximum distance H1 from the outer surface of the first protrusion 200 to the surface of the main body portion 100 is greater than 250 µm, the connection stability between the first protrusion 200 and the main body portion 100 may be low due to large H1, causing the first protrusion 200 to be easily detached from the main body portion 100.

Referring to FIG. 5, in some embodiments, a maximum distance (as shown by h1 in FIG. 5) from the first protruding point 210 to the outer surface of the first protrusion 200 is less than or equal to 100 µm. For example, the maximum distance h1 from the first protruding point 210 to the outer surface of the first protrusion 200 may be 30 µm, 60 µm or 90 µm. If the distance h1 from the first protruding point 210 to the outer surface of the first protrusion 200 is too large, the first protruding point 210 may detach from the first protrusion 200, affecting the connection stability between the first protruding point 210 and the first protrusion 200, and further affecting the bearing capacity of the first protruding point 210 to the hard object 400.

Based on the above embodiments, the area of the orthographic projection of the first protruding point 210 onto the outer surface of the first protrusion 200 is less than or equal to 2 mm², for example, the area of the orthographic projection of the first protruding point 210 onto the outer surface of the first protrusion 200 may be 0.3 mm², 0.5 mm², 0.8 mm², 1.3 mm², 1.7 mm², etc. In a specific implementation, the number of first protruding points 210 that can be provided on one first protrusion 200 may be five, six, seven, eight or even more.

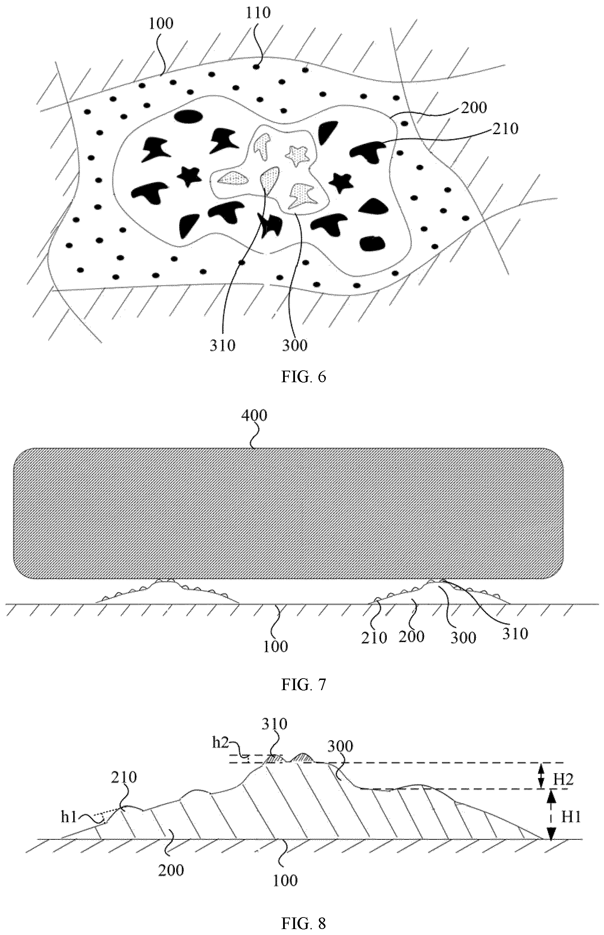

Referring to FIG. 6, at least one second protrusion 300 is further provided on the outer surface of the first protrusion 200. When there are a plurality of second protrusions 300, the plurality of second protrusions 300 are spaced apart and evenly distributed on the outer surface of the first protrusion 200. By providing the second protrusions 300 on the outer surface of the first protrusion 200, the plastic cover may contact the hard object 400 through the second protrusions 300. Compared with the fact that the first protrusion 200 directly contacts the hard object 400, a distance between the second protrusions 300 on two adjacent first protrusions 200 is greater than the distance between two adjacent first protrusions 200, thereby further hindering the continuity of the scratch, lowering the clarity of the scratch and making it difficult to be detected, and reducing the impact of the scratch on the aesthetics of the plastic cover.

In an exemplary embodiment, an area of an orthographic projection of the second protrusion 300 onto the outer surface of the first protrusion 200 is greater than or equal to 1 mm² and less than or equal to 4 mm². For example, the area of the orthographic projection of the second protrusion 300 onto the outer surface of the first protrusion 200 may be 1 mm², 1.5 mm², 2 mm², 3 mm² or 3.3 mm².

At least one protruding point 310 is provided on the second protrusion 300, so that the hard object 400 can contact the second protruding point 310 on the second protrusion 300, and the contact area between the second protrusion 300 and the hard object 400 is reduced, thereby reducing the scratch area of the hard object 400 on one second protrusion 300, and further reducing the overall scratch area on the main body portion 100.

There are a plurality of second protruding points 310, and the plurality of second protruding points 310 are spaced apart and evenly distributed on the second protrusion 300. For example, two second protruding points 310 or three second protruding points 310 may be provided on one second protrusion 300. By providing a plurality of second protruding points 310 on the second protrusion 300, the support of the second protruding point 310 to the hard object 400 can be improved, the probability of the second protruding point 310 detaching from the second protrusion 300 can be reduced, and the connection stability between the second protruding point and the second protrusion 300 can be improved.

Referring to FIG. 7, the second protrusion 300 extends away from the outer surface of the first protrusion 200, and an extension direction of the second protrusion 300 is perpendicular to a surface at which the second protrusion 300 is connected with the first protrusion 200. In some embodiments, an outer surface of the second protrusion 300 may also be an arc-shaped surface, and a shape of the orthographic projection of the outer surface of the second protrusion 300 onto the first protrusion 200 may be the same as that of the orthographic projection of the outer surface of the first protrusion 200 onto the surface of the main body portion 100. By making an extension direction of the second protruding point 310 perpendicular to a surface at which the second protruding point 310 is connected with the arc-shaped surface of the second protrusion 300, the second protruding point 310 may extent in various directions, so that the second protruding point 310 can bear forces in different directions.

Referring to FIG. 8, a maximum distance (as shown by H2 in FIG. 8) from the outer surface of the second protrusion 300 to the outer surface of the first protrusion 200 is less than or equal to 200 µm. For example, the maximum distance H2 from the outer surface of the second protrusion 300 to the outer surface of the first protrusion 200 may be 50 µm, 70 µm, 120µm, or 180 µm. A size of the second protruding point 310 is the same as that of the first protruding point 210. In a specific implementation, an area of an orthographic projection of the second protruding point 310 onto the outer surface of the second protrusion 300 is less than or equal to 1 mm². For example, the area of the orthographic projection of the second protruding point 310 to the outer surface of the second protrusion 300 may be 0.3 mm², 0.5 mm² or 0.8 mm².

The embodiments of the present application also provide a vehicle, which may include a vehicle body and the plastic cover described above. By applying the plastic cover described above to the vehicle, the scratch resistance of the plastic cover can be improved, and the continuity of the scratch on the surface of the plastic cover can be reduced, thereby reducing the clarity of the scratch on the plastic cover, improving the aesthetics of the plastic cover when being scratched, and improving the user experience of the vehicle.

The various embodiments or implementations in this specification are described in a progressive manner. Each embodiment focuses on the differences from other embodiments, and the same or similar parts between the various embodiments can be referenced to each other.

It should be noted that the phrases "in a specific implementation", "in some embodiments", "in this embodiment", "exemplarily" and the like mentioned in the specification indicate that the described embodiment may include specific features, structures or characteristics, but not every embodiment may necessarily include the specific features, structures or characteristics. Furthermore, such phrases do not necessarily refer to the same embodiment. In addition, when describing specific features, structures or characteristics in conjunction with the embodiment, it is within the knowledge of those skilled in the art to implement such features, structures or characteristics in conjunction with other embodiments that are explicitly or not explicitly described.

Generally, terms should be understood, at least in part, by the context in which they are used. For example, the term "one or more" as used herein may be used to describe any feature, structure, or characteristic in a singular sense, or may be used to describe a combination of features, structures, or characteristics in a plural sense, depending, at least in part, on the context. Similarly, terms such as "a", "an" or "the" may also be understood to convey singular usage or to convey plural usage, depending, at least in part, on the context.

It should be easily understood that "on", "above" and "over" in this disclosure should be interpreted in the broadest manner, so that "on" not only means "directly on something", but also includes the meaning of "on something" with an intervening feature or layer therebetween, and "above" or "over" not only includes the meaning of "above" or "over" something, but may also include the meaning of "above" or "over" something with no intervening feature or layer therebetween (i.e., directly on something).

In addition, for convenience of description, spatially relative terms such as "under", "beneath", "below", "over", "above" and the like may be used herein to describe the relationship of one element or feature relative to other elements or features as shown in the figures. Spatially relative terms are intended to encompass different orientations of the device in use or operation other than the orientation shown in the drawings. The device may have other orientations (rotated by 90 degrees or in other orientations), and the spatially relative descriptors used herein may also be interpreted accordingly.

Finally, it should be noted that the above embodiments are only used to illustrate the technical solutions of the present application, rather than to limit it. Although the present application has been described in detail by referring to the aforementioned embodiments, those skilled in the art should understand that they can still modify the technical solutions described in the aforementioned embodiments, or replace some or all of the technical features therein with equivalents. However, these modifications or replacements do not cause the essence of the corresponding technical solutions to deviate from the scope of the technical solutions of the embodiments of the present application.

## Claims

1. A plastic cover, comprising a main body portion, wherein a surface of the main body portion is provided with a plurality of first protrusions, and the plurality of first protrusions are spaced apart and evenly distributed on the surface of the main body portion;
each first protrusion is further provided with a plurality of first protruding points, and the plurality of first protruding points are spaced apart and evenly distributed on an outer surface of the first protrusion; and
the first protrusions, the first protruding points and the main body portion are in an integrated molding structure.

2. The plastic cover according to claim 1, wherein the outer surface of the first protrusion is disposed facing away from the surface of the main body portion, and the outer surface of the first protrusion is an arc-shaped surface.

3. The plastic cover according to claim 2, wherein the first protruding points are provided on the arc-shaped surface and extend away from the arc-shaped surface, and an extension direction of the first protruding points is perpendicular to a surface at which the first protruding points are connected with the arc-shaped surface.

4. The plastic cover according to claim 1, wherein an area of an orthographic projection of the each first protrusion onto the surface of the main body portion is greater than or equal to 1 mm² and less than or equal to 6 mm²;
and/or, an area of an orthographic projection of the first protruding point onto the outer surface of the first protrusion is less than or equal to 2 mm².

5. The plastic cover according to claim 4, wherein a maximum distance from the outer surface of the first protrusion to the surface of the main body portion is less than or equal to 250 µm;
and/or, a maximum distance from the first protruding point to the outer surface of the first protrusion is less than or equal to 100 µm.

6. The plastic cover according to claim 5, wherein a distance between every two adjacent first protrusions is greater than or equal to 0.2 mm and less than or equal to 6 mm.

7. The plastic cover according to any one of claims 1 to 6, wherein the outer surface of the first protrusion is further provided with at least one second protrusion, and the plurality of the second protrusions are spaced apart and evenly distributed on the outer surface of the first protrusion;
the second protrusion is provided with at least one second protruding point;
and/or, there are a plurality of second protruding points, and the plurality of second protruding points are spaced apart and evenly distributed on the second protrusion.

8. The plastic cover according to claim 7, wherein the second protrusion extends away from the outer surface of the first protrusion, and an extension direction of the second protrusion is perpendicular to a surface at which the second protrusion is connected with the first protrusion.

9. The plastic cover according to claim 8, wherein a maximum distance from an outer surface of the second protrusion to the outer surface of the first protrusion is less than or equal to 200 µm;
and/or, a size of the second protruding point is the same as that of the first protruding point.

10. The plastic cover according to claim 9, wherein an area of an orthographic projection of the second protruding point onto the outer surface of the second protrusion is less than or equal to 1 mm².

11. The plastic cover according to claim 10, wherein an area of an orthographic projection of the second protrusion onto the outer surface of the first protrusion is greater than or equal to 1 mm² and less than or equal to 4 mm².

12. A vehicle, comprising a vehicle body and the plastic cover according to any one of claims 1 to 11.
